# EUROPEAN PATENT SPECIFICATION

(11) **EP 2 009 277 B1**
(45) Date of publication and mention of the grant of the patent: **10.08.2011**
(21) Application number: 07111267.6
(22) Date of filing: 28.06.2007
(51) Int. Cl.: F02M 63/02, F02D 19/06, F02M 43/00

(54) **An internal combustion engine system, and a method in such an engine system**
Verbrennungsmotorensystem und Verfahren in einem solchen Motorensystem
Système de moteur à combustion interne et procédé dans un tel système de moteur

(43) Date of publication of application: 31.12.2008
(73) Proprietor: Ford Global Technologies, LLC, Dearborn, MI 48126 (US)
(72) Inventor: Morén, Mats, SE-417 19, Göteborg (SE)
(74) Representative: Holmberg, Magnus

(56) References cited:
- WO-A-2004/097196
- US-A- 5 524 582
- US-A- 5 775 282
- US-A1- 2007 125 338
- US-B1- 7 159 568

## Description

### TECHNICAL FIELD

The invention relates to an engine system and a method in the engine system. The engine system comprises
- an internal combustion engine with at least one cylinder,
- at least one first injection device, each arranged to inject fuel directly into a respective cylinder,
- first fuel storage means arranged to communicate with the at least one first injection device,
- at least one second injection device, arranged to inject fuel into the engine, and
- second fuel storage means arranged to communicate with the at least one second injection device.

### BACKGROUND

Vehicles with internal combustion engines and a bi-fuel system, i.e. two fuel systems, herein called first and second fuel systems, can provide flexibility for the user, and environmental benefits. In many such vehicles, the engine is adapted to run alternatively on a liquid fuel, such as petrol, and a fuel in gaseous form, such as liquefied petroleum gas (LPG) or Compressed Natural Gas (CNG), each stored in respective tanks. In such multi fuel solutions, each fuel system has its own set of fuel injectors, so that for each cylinder of the engine, two fuel injectors are arranged to communicate with the respective fuel tanks.

For petrol engines, direct fuel injection provides a number of known advantages over port injection, for example in that a higher compression ration is allowed without knocking. However, in many known bi-fuel systems, such as the one presented in WO2004097196A1, port fuel injection, rather than direct injection, is used for the liquid fuel. The reason is that direct fuel injectors for petrol may be deteriorated quickly, due to petrol remaining in the fuel injectors while not operated and the engine is running on the alternative fuel, e.g. gas. More specifically, while the engine is operated on the alternative fuel, the temperature of the petrol direct fuel injectors, being located close to the respective combustion chamber, will be high, and petrol trapped in the injectors will create deposits, with the risk of the injectors becoming blocked. Thus, often port fuel injection is used for both fuel systems.

JP2005233059 describes a system with port fuel injection for gaseous fuel, and direct fuel injection for liquid fuel. During a fuel mode switch from one fuel to the other, during a preset time, the direct fuel injectors operate under homogeneous combustion with increased injection pressure, in order to clean away deposits in the injectors. However, the engine will only run during the limited preset time in the switch mode, and reduction of injector deposits is not possible after the switch mode.

### SUMMARY OF THE INVENTION

It is an object of the invention to allow fuel mode switches in multi fuel engine systems comprising direct fuel injection, in an effective manner with reduced risk of direct fuel injector deterioration.

It is an object of the invention to allow smooth and effective fuel mode switches in engine systems with a fuel system for gaseous fuel, and a fuel system for liquid fuel which includes direct fuel injection, with reduced risk of direct fuel injector deterioration.

These objects are reached by an engine system as defined in the claim 1.

US 7,159,568 B1 discloses an engine system provided with a fuel delivery system in which two fuel tanks are used with fuel pumps and two injectors per cylinder. One injector may be a direct injector for a cylinder, and the other may be a port injector for the cylinder. The supply of fuel from one of the fuel thanks can be inhibited, whereas flow from the other fuel tank to both injectors is allowed.

As exemplified below, the first fuel supply inhibition means can comprise a first fuel shut-off valve. Thereby, a first fuel supply driving means can also be provided, by means of which the supply of fuel from the first fuel storage means to the first injection device can be selectively driven. Alternatively, such a first fuel supply driving means can also provide the function of the first fuel supply inhibition means, i.e. to inhibit the flow of fuel from the first fuel storage means to the first injection device.

As exemplified below, the inter fuel system communication control means can be provided as an inter communication shut-off valve, controllable by an electronic control unit (ECU), in order to control communication between the second fuel storage means and the at least one first injection device.

With the engine system according to the invention, it is possible to perform a switch, during operation of the engine, from a first fuel mode with a fuel of a first type from the first fuel storage means to a second fuel mode with a fuel of a second type from the second fuel storage means by controlling the first fuel supply inhibition means, so as to inhibit supply of fuel from the first fuel storage means to the first injection device, and controlling the inter fuel system communication control means, so as to allow communication between the second fuel storage means and the at least one first injection device. If the first injection device(s) are controlled so as to inject fuel after the communication between the second fuel storage means and the first injection device(s) has been effected, fuel of the second type will be transported to the cylinders via the first injection device(s), whereby any fuel of the first type remaining in the first injection device(s) will be transported with the fuel of the second type out of the first injection device(s). Thus, it can be secured that no fuel of the first type will remain in the first injection device(s). This will be of great advantage when the fuel of the first type is a fossil fuel (e.g. petrol), or a fossil fuel mix, since deterioration of the first injector device(s) of the type described above can be avoided. Such a bi-fuel system allows direct fuel injection, in which fuel mode changes can be carried out at most normal engine operational situations.

The invention is applicable to engine systems with internal combustion engines adapted to be operated alternatively with the fuel of the first type, being a liquid fuel, and the fuel of the second type, being liquid or gas. Thus, in some embodiments, both fuel types can be liquid, for example petrol and ethanol, or petrol and liquid injected LPG. In a case of two liquid fuels, second fuel supply control means, by means of which the supply of fuel from the second fuel storage means to the at least one second injection device can be controlled, can comprise second fuel supply driving means, for example in the form of a fuel pump. In addition, the second fuel supply control means can comprise a second fuel supply inhibition means, for example in the form of a second fuel shut-off valve.

Further, the invention is applicable to engine systems with different arrangements of the second injection devices, for example used for gas injection. Below, an example is given in which the second injection devices are each arranged to inject fuel into respective intake ports of an intake manifold of the engine. Alternatively, the at least one second injection device could be arranged, similarly to the at least one first injection device, to inject fuel directly into a respective cylinder. As a further alternative, the at least one second injection device could be arranged to inject fuel into an intake manifold of the engine, and thereby be shared by more than one cylinder.

Preferably, the first fuel storage means is arranged to communicate with the at least one first injection device via first fuel transportation means, the second fuel storage means is arranged to communicate with the at least one second injection device via second fuel transportation means, an inter fuel system conduit is adapted to provide communication between the second fuel transportation means and the first fuel transportation means, downstream of the first fuel supply inhibition means, and the inter fuel system communication control means is adapted to control the flow of fuel in the inter fuel system conduit. Thereby, in case the engine system comprises second fuel supply control means, by means of which the supply of fuel from the second fuel storage means to the at least one second injection device can be controlled, the inter fuel system conduit can be adapted to provide communication between the first fuel transportation means and the second fuel transportation means, upstream of the second fuel supply control means.

Since the first injection device(s) provide direct injection, the pressure in the first injection device(s) is normally high during operation. During a mode switch from the fuel of the first type to fuel of the second type, the inter fuel system communication control means can not be controlled so as to allow communication between the second fuel storage means and the first injection device(s), until the pressure downstream of the inter fuel system communication control means has fallen at least below the pressure upstream thereof. In case the fuel of the second type is gas, usually the second fuel supply control means is provided as a pressure regulator, whereby the pressure upstream thereof is much higher than the pressure downstream thereof. This means that, with this embodiment, during the mode switch from the fuel of the first type to gas, the step of controlling the inter fuel system communication control means so as to allow communication between the second fuel storage means and the first injection device(s) can be carried out without any delay, or only with a short delay, arid this will considerably speed up the mode switch.

Preferably, the engine system comprises first fuel supply driving means adapted to pump fuel from the first fuel storage means to the at least one first injection device, the first fuel supply inhibition means being a first fuel shut-off valve provided downstream of the first fuel supply driving means. Thereby, the first fuel shut-off valve can be closed before opening the inter fuel system communication control means, which will prevent fuel of the second type to reach the first fuel supply driving means. This is advantageous specially in systems where the fuel of the first type is liquid fuel, and the fuel of the second type is gas, since gas reaching the first fuel supply driving means could prevent its proper operation once it is controlled to resume pumping the liquid fuel. Also, where the first fuel supply driving means is a high pressure pump, during the non-supply of the liquid fuel, a relatively high pressure can be retained at the pump, which will facilitate putting it back in operation, once the liquid fuel is again to be supplied.

Preferably, the engine system comprises an electronic control unit being adapted to, in order to effect the switch from the first fuel mode with the fuel from the first fuel storage means to the second fuel mode with the fuel from the second fuel storage means, perform the steps mentioned above of controlling the first fuel supply inhibition means, so as to inhibit supply of fuel from the first fuel storage means to the first injection device, and controlling the inter fuel system communication control means, so as to allow communication between the second fuel storage means and the at least one first injection device.

Preferably, the electronic control unit is adapted to control the inter fuel system communication control means after the control of the first fuel supply inhibition means. Thereby, the fuel pressure at the first injection device(s) can be allowed to decrease to, or below, the pressure upstream of the inter fuel system communication control means, before communication between the second fuel storage means and the first injection device(s) is allowed.

Preferably, the electronic control unit is adapted to control, after the control of the first fuel supply inhibition means, the first and second injection devices for simultaneous injection of fuel from the first and second fuel storage means. Thereby, as fuel from the first fuel storage means remaining at the first injection device(s) is "emptied" into the engine, the operation of the second injection devices can be initiated to inject fuel from the second fuel storage means, in order to provide a smooth transition the second fuel mode.

Preferably, the electronic control unit is adapted to determine, after the control of the inter fuel system communication control means, whether fuel from the first fuel storage means remains in the at least one first injection device. Thereby, is some embodiments, the electronic control unit is adapted to control, if it is determined that no fuel from the first fuel storage means remains in the at least one first injection device, the first injection device for injection of fuel from the second fuel storage means. This means that the first injection device(s) is (are) kept in use, after completion of the switch to the second fuel mode. This use, which can be of low degree, can prevent the temperature of the first injection device(s) from becoming too high during the second fuel mode, since the flow of fuel through the first injection device(s) will have a cooling effect. Also, operating the first injection device(s) during the second fuel mode can prevent soot formation on parts of the first injection device(s) exposed to the respective combustion chamber, which soot could "clog" the first injection device(s).

The objects are also reached with a method according to any of the claims 8-11.

### DESCRIPTION OF THE FIGURES

Below, the invention will be described in detail with reference to the drawings, in which
- fig. 1 shows schematically parts of an engine system, and
- fig. 2 and 3 are block diagrams depicting steps in a method according to a preferred embodiment of the invention.

### DETAILED DESCRIPTION

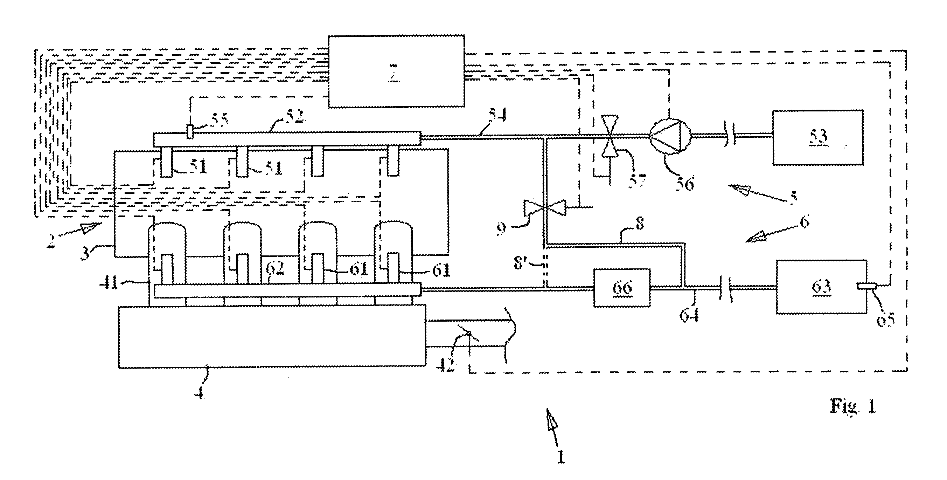

Fig. 1 shows a schematic view of parts of an engine system 1 comprising an internal combustion engine with a cylinder head 3. The engine 2 in this example has four cylinders, but it should be noted that the invention is applicable to engines with any number of cylinders, i.e. one or more. The engine is provided with an intake manifold 4 comprising for each cylinder an intake port 41 for the supply of air to the respective cylinder, the admission of air to the air intake manifold 4 being controllable by a throttle valve 42.

The engine system 1 comprises a first fuel system 5 for a first type of fuel, which is in liquid form, in this example petrol (am. English gasoline). Examples of alternative fuels for the first fuel system 5 are ethanol/petrol mixes, e.g. E85 (a mix of 85% ethanol and 15% petrol), methanol/petrol mixes, e.g. M85 (a mix of 85% methanol and 15% petrol), or any other fossil fuel mixes for spark ignited engines. The engine system 1 also comprises a second fuel system 6 for a second type of fuel, which in this example is in gaseous form. In general, the second type of fuel could be any kind of gaseous or liquid fuel, for example natural gas, liquid compressed natural gas (LNG), gas derived from coal, waste or biomass, gas made from petroleum, (such as liquefied petroleum gas (LPG), or refinery gas), hydrogen, liquid hydrogen, or gas from a fermentation process.

The engine system comprises an electronic control unit (ECU) 7 with processing and data storage capabilities, which can be provided as one unit, or more than one logically interconnected units. The ECU 7 has functions of receiving signals corresponding to values of various parameters of the engine system, and to control functions of the engine system, some of which functions are described below. Connections for signals to the ECU 7 and ECU control signals are indicated in fig.1. with broken lines.

The first fuel system 5 comprises for each cylinder a first injection device 51, each arranged to inject fuel directly into the respective cylinder, the amount of fuel injected by the first injection devices 51 being controllable. Each first injection device 51 is of any known type adapted for direct fuel injection. A first fuel storage means 53, comprising at least one first fuel tank 53, for liquid fuel, is arranged to communicate, via first fuel transportation means 52, 54, with the first injection devices 51. The first fuel transportation means 52, 54 comprises a first fuel rail 52, by means of which the first injection devices 51 can communicate with each other, and a first conduit 54, by means of which the first fuel tank 53 can communicate with the first fuel rail 52.

A first fuel pressure sensor 55 is adapted to send to the ECU 7 signals corresponding to the pressure in the first fuel rail 52. Further, a first fuel supply driving means 56 in the form of a high pressure fuel pump 56 is provided in the first conduit 54, and is adapted to pump fuel from the first fuel tank 53 to the first injection devices 51. The ECU 7 is adapted to control the high pressure fuel pump 56 and thereby selectively activate it and control its flow capacity, partly based on signals from the first fuel pressure sensor 55. Preferably, where the first type of fuel is petrol, a methanol/petrol mix (e.g. M5-M100 (M5 being a mix of 5% methanol and 95% petrol)), or an ethanol/petrol mix (e.g. E5-E100 (E5 being a mix of 5% ethanol and 95% petrol)), or any other fossil fuel mix for spark ignited engines, the pressure in the first fuel rail 52 during operation of the high pressure fuel pump, is within the interval 20-200 bar.

In addition, a first fuel supply inhibition means 57 in the form of a first fuel shut-off valve 57 is provided in the first conduit 54. By means of the first fuel shut-off valve 57, which is controllable by the ECU 7, the supply of fuel from the first fuel tank 53 to the first injection devices 51 can be selectively inhibited.

The second fuel system 6 comprises for each cylinder a second injection device 61, each arranged to inject fuel into the respective intake port 41, the amount of fuel injected by the second injection devices 61 being controllable. Each second injection device 61 is of any known type adapted for port fuel injection. A second fuel storage means 63, comprising at least one second fuel tank 63, is arranged to communicate, via second fuel transportation means 62, 64, with the second injection devices 61. The second fuel tank 63 is in this example is a gas tank, but could alternatively be another liquid fuel tank. The second fuel transportation means 62, 64 comprises a second fuel rail 62, by means of which the second injection devices 61 can communicate with each other, and a second conduit 64, by means of which the second fuel tank 63 can communicate with the second fuel rail 62.

In case of gaseous fuel storage in the second fuel system 6, a second pressure sensor 65 is adapted to send to the ECU 7 signals corresponding to the pressure in the second fuel tank 63. As an example, the pressure in the second fuel tank 63 can vary from 7-200 bar, depending on the amount of gas stored. As an alternative, for example in some cases where the second fuel system 6 is adapted for liquid fuels, the second pressure sensor 65 could be provided in the second fuel rail 62.

A second fuel supply control means 66 in the form of a gas pressure regulator 66 is provided in the second conduit 64, and is adapted to regulate, e.g. by a mechanical regulation device, the pressure in the second fuel rail 62 so as to be essentially constant, for example at a level in the interval 2.5-3.8 bar.

An inter fuel system conduit 8 is provided to allow communication between the first and second systems 5, 6, more specifically, between the first and second conduits 54, 64. The inter fuel system conduit 8 connects to the first conduit 54 downstream of the first fuel shut-off valve 57. In this embodiment, and opposite end of the inter fuel system conduit 8 connects to the second conduit 64 upstream of the gas pressure regulator 66. Alternatively, the inter fuel system conduit 8 can connect to the second conduit 64 downstream of the gas pressure regulator 66, as indicated by broken lines 8' in fig. 1. By means of the inter fuel system conduit 8, the second fuel tank 63 can communicate, downstream of the first fuel shut-off valve 57, with the first injection devices 51.

Further, an inter fuel system communication control means 9 in the form of an inter communication shut-off valve 9 is provided in the inter fuel system conduit 8. By means of the inter communication shut-off valve 9, which is controllable by the ECU 7, the supply of fuel from the second fuel tank 63 to the first injection devices 51 can be selectively inhibited.

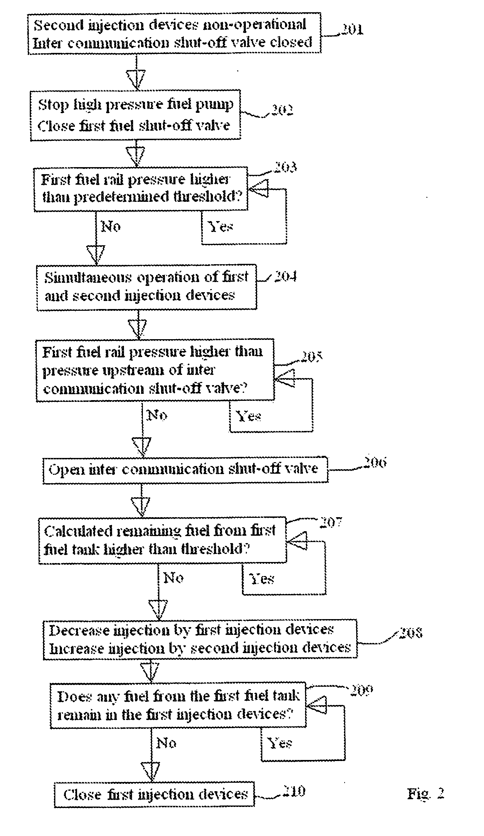

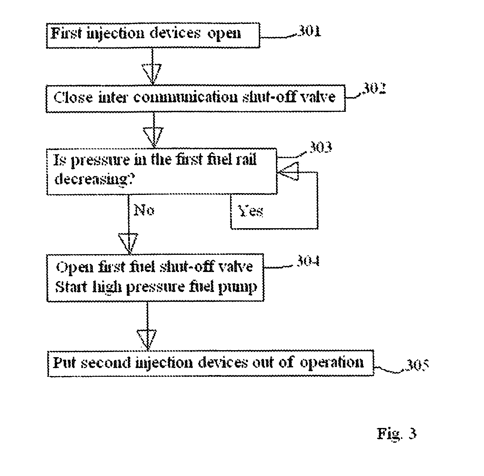

A preferred embodiment of a method according to the invention will here be described with reference to fig. 2 and 3. Fig. 2 shows steps in a switch from a liquid fuel mode to a gas mode of the engine system, and fig. 3 shows steps in a switch from the gas mode to the liquid fuel mode.

When the engine system is operating in the liquid fuel mode, the second injection devices 61 are non-operational, and the inter communication shut-off valve 9 is closed 201. It should be noted that a second fuel shut-off valve could be provided downstream or upstream of the gas pressure regulator 66, to secure that no gas is supplied to the engine during the liquid fuel mode.

In a first step in a switch from the liquid fuel mode to a gaseous fuel mode, in order to inhibit fuel supply from the first fuel tank 53 to the first injection devices 51, the ECU 7 stops 202 the high pressure fuel pump 56, and closes 202 the first fuel shut-off valve 57. Thereafter, the first injection devices 51 are still controlled so as to inject fuel into the respective cylinders. Because of this, the pressure in the first fuel rail 52 will start to decrease.

After the fuel supply from the first fuel tank 53 to the first injection devices 51 has been inhibited, the ECU determines 203, based partly on signals from the first fuel pressure sensor 55, whether the fuel pressure in the first fuel rail 52 is higher than a first predetermined pressure threshold value. This first pressure threshold value is determined so that it corresponds to the lowest fuel pressure during which it is possible to obtain direct fuel injection in sufficient amounts, and with sufficient quality. If the in the first fuel rail 52 pressure is higher than the first predetermined pressure threshold value, the ECU 7 repeats the determination based on further signals from the first fuel pressure sensors 55.

If the in the first fuel rail 52 pressure is not higher than the first predetermined pressure threshold value, the ECU 7 controls the second injection devices 61 so as to allow gas to the engine 204. Thereby, the ECU 7 controls the first and second injection devices 51, 61, so that a portion (X%) of the total fuel mass, or fuel flow, i.e. fuel from both fuel storage means 53, 63, is fuel from the second fuel tank 63, and the remaining portion (100-X%) of the total fuel mass, or fuel flow, is fuel from the first fuel, tank 53. Said portion (X%) from the second fuel tank 63 can be a predetermined percentage value, or determined based on a predetermined dependence on the first fuel rail 52 pressure. In the latter case, the portion (X%) from the second fuel tank 63 can be gradually increased as the first fuel rail 52 pressure decreases.

Also, after the fuel supply from the first fuel tank 53 to the first injection devices 51 has been inhibited, the ECU determines the ECU 7 determines 205, based on signals from the first and second pressure sensors 55, 65, whether the pressure in the first fuel rail 52 is higher than in the second fuel tank 63, i.e. upstream of the inter communication shut-off valve 9. If the in the first fuel rail 52 pressure is higher than the second fuel tank 63 pressure, the ECU 7 repeats the determination based on further signals from the first and second pressure sensors 55, 65.

Alternatively, in case the inter fuel system conduit 8 is connected to the second conduit 64 downstream of the gas pressure regulator 66, as indicated by broken lines 8' in fig. 1, where the pressure as mentioned is kept at a constant level, (for example within 2.5-3.8 bar), of course the ECU 7 determines 205, based on signals from the first fuel pressure sensor 55, whether the pressure in the first fuel rail 52 is higher than in the second conduit 64 downstream of the gas pressure regulator 66.

If the in the first fuel rail 52 pressure is not higher than the second fuel tank 63 pressure, the ECU 7 controls 206 the inter communication shut-off valve 9 so as to open it 207. This will allow communication between the second fuel tank 63 and the first injection devices 51. Since the first injection devices 51 are still controlled so as to inject fuel, gas from the second fuel tank 63 will be transported to the cylinders via the first injection devices 51, whereby fuel from the first fuel tank 53 in the first injection devices 51 will be transported with the gas out of the first injection devices 51.

The ECU 7 also determines 207 the amount of fuel from the first fuel tank 53 remaining downstream of the first fuel shut-off valve 57. Such a determination can be carried out in a manner known in the art, for example based on injection time intervals, engine load, and the geometric volume of the first fuel rail 52 and conduits of the first fuel transportation means 52, 54. The determined amount of remaining fuel from the first fuel tank 53 is compared to a predetermined fuel amount threshold value. Since, said fuel amount calculation can deviate from the actual amount of remaining fuel, said threshold value corresponds to the lowest calculated value by which it can be established that there is any fuel remaining downstream of the first fuel shut-off valve 57.

If the determined amount of remaining fuel from the first fuel tank 53 is not higher than the predetermined fuel amount threshold value, the injection devices 51, 61 are controlled 208 so that the portion, of the total fuel flow, injected by the first injection devices 51 is further decreased, and the portion, of the total fuel flow, injected by the second injection devices 51 is further increased.

The ECU then determines 209 whether any fuel from the first fuel tank 53 remains in the first injection devices 51. This can be done based on signals from an exhaust gas sensor (not shown), in the form of a lambda sensor, located in an exhaust duct (not shown) of the engine 2. More specifically, signals from the exhaust gas sensor can be used to determine whether the mixture of air and fuel from the first fuel tank 53 becomes leaner, and based thereon, it can be determined whether fuel from the first fuel tank 53 remains in the first injection devices 51. Alternatively, the determination 209 whether any fuel from the first fuel tank 53 remains in the first injection devices 51 can be done with a calculation as described above regarding step 107.

If it is determined that no fuel from the first fuel tank 53 remains in the first injection devices 51, the first injection devices 51 are put out of operation, i.e. they are closed 209, and the switch to the gas fuel mode is completed.

Alternatively, as mentioned above, the first injection devices 51 can be kept in use, whereby in the gas fuel mode, gas is injected through the port injection devices 61 and also the direct injection devices 51.

As can be seen in fig. 3, the switch from the gas mode to the liquid fuel mode comprises putting the first injection devices 51 in use at a low rate 301, (unless they are already in use during the gas mode). The ECU 7 controls the inter communication shut-off valve 9 so as to close it 302. Thereby, the pressure in the first fuel rail 52 will decrease until most of the remaining gas is evacuated through the first injection devices 51. Therefore, the ECU 7 determines 303, based on signals from the first fuel pressure sensor 55, whether the pressure in the first fuel rail 52 is decreasing or has reached below a predetermined second pressure threshold value. When it is determined that the first fuel rail 52 pressure is not decreasing further, or that the second pressure threshold value is reached, the first fuel shut-off valve 57 is opened 304, and the high pressure fuel pump 56 is activated 304. When the fuel pressure in first fuel rail, as measured by the first fuel pressure sensor 55, has reached an operating pressure for liquid fuel, the second injector devices 61 are put out of operation, and the first injection devices 51 are put to use at full rate.

## Claims

1. An engine system comprising
- an internal combustion engine (2) with at least one cylinder,
- at least one first injection device (51), each arranged to inject fuel directly into a respective cylinder,
- first fuel storage means (53) arranged to communicate with the at least one first injection device (51),
- at least one second injection device (61), arranged to inject fuel into the engine (2),
- second fuel storage means (63) arranged to communicate with the at least one second injection device (61),
- first fuel supply inhibition means (57) by means of which the supply of fuel from the first fuel storage means (53) to the at least one first injection device (51) can be selectively inhibited, the second fuel storage means (63) being arranged to communicate, downstream of the first fuel supply inhibition means (57), with the at least one first injection device (51),
- inter fuel system communication control means (9) by means of which the communication between the second fuel storage means (63) and the at least one first injection device (51) can be controlled, and
- an electronic control unit (7) adapted to, in order to effect a switch from a first fuel mode with a fuel from the first fuel storage means (53) to a second fuel mode with a fuel from the second fuel storage means (63), control (202) the first fuel supply inhibition means (57), so as to inhibit supply of fuel from the first fuel storage means (53) to the first injection device (51), and control (206) the inter fuel system communication control means (9), so as to allow communication between the second fuel storage means (63) and the at least one first injection device (51), **characterized in that** the electronic control unit (7) is adapted to control (206) the inter fuel system communication control means (9) after the control (202) of the first fuel supply inhibition means(57).

2. A system according to claim 1, wherein the first fuel storage means (53) is arranged to communicate with the at least one first injection device (51) via first fuel transportation means (52, 54), the second fuel storage means (63) is arranged to communicate with the at least one second injection device (61) via second fuel transportation means (62, 64), an inter fuel system conduit (8, 8') is adapted to provide communication between the second fuel transportation means (62, 64) and the first fuel transportation means (52, 54), downstream of the first fuel supply inhibition means (57), and the inter fuel system communication control means (9) is adapted to control the flow of fuel in the inter fuel system conduit (8, 8').

3. A system according to claim 2, comprising second fuel supply control means (66), by means of which the supply of fuel from the second fuel storage means (63) to the at least one second injection device (61) can be controlled, the inter fuel system conduit (8) being adapted to provide communication between the first fuel transportation means (52, 54) and the second fuel transportation means (62, 64), upstream of the second fuel supply control means (66).

4. A system according to any of the preceding claims, comprising first fuel supply driving means (56) adapted to pump fuel from the first fuel storage means (53) to the at least one first injection device (51), the first fuel supply inhibition means (57) being a first fuel shut-off valve (57) provided downstream of the first fuel supply driving means (56).

5. A system according to claim 1, wherein the electronic control unit (7) is adapted to control (204), after the control (202) of the first fuel supply inhibition means (57), the first and second injection devices (51, 61) for simultaneous injection of fuel from the first and second fuel storage means (53, 63).

6. A system according to claim 1 or 5, wherein the electronic control unit (7) is adapted to determine (209), after the control (206) of the inter fuel system communication control means (9), whether fuel from the first fuel storage means (53) remains in the at least one first injection device (51).

7. A system according to claim 6, wherein the electronic control unit (7) is adapted to control (204), if it is determined that no fuel from the first fuel storage means (53) remains in the at least one first injection device (51), the first injection device (51) for injection of fuel from the second fuel storage means (63).

8. A method, in an engine system according to any of the claims 1-7, for a switch from a first fuel mode with a fuel from the first fuel storage means (53) to a second fuel mode with a fuel from the second fuel storage means (63) comprising the steps of
- controlling (202) the first fuel supply inhibition means (57), so as to inhibit supply of fuel from the first fuel storage means (53) to the first injection device (51), and
- controlling (206) the inter fuel system communication control means (9), so as to allow communication between the second fuel storage means (63) and the at least one first injection device (51),
**characterized in that** the step of controlling (206) the inter fuel system communication control means (9) is performed after the step of controlling (202) the first fuel supply inhibition means (57).

9. A method according to claim 8, comprising, after the step of controlling (202) the first fuel supply inhibition means (57), controlling (204) the first and second injection devices (51, 61) for simultaneous injection of fuel from the first and second fuel storage means (53, 63).

10. A method according to any of the claims 8-9, comprising determining (209), after the step of controlling (206) the inter fuel system communication control means (9), based on signals from an exhaust gas sensor, whether fuel from the first fuel storage means (53) remains in the at least one first injection device (51).

11. A method according to claim 10, comprising, if it is determined that no fuel from the first fuel storage means (53) remains in the at least one first injection device (51), controlling (204) the first injection device (51) for injection of fuel from the second fuel storage means (63).

## Patentansprüche

1. Motorsystem, das umfasst:
- eine Brennkraftmaschine (2) mit wenigstens einem Zylinder,
- wenigstens eine erste Einspritzvorrichtung (51), wovon jede dazu ausgelegt ist, Kraftstoff direkt in einen entsprechenden Zylinder einzuspritzen,
- erste Kraftstoffspeichermittel (53), die dazu ausgelegt sind, mit der wenigstens einen ersten Einspritzvorrichtung (51) zu kommunizieren,
- wenigstens eine zweite Einspritzvorrichtung (61), die dazu ausgelegt ist, Kraftstoff in die Maschine (2) einzuspritzen,
- zweite Kraftstoffspeichermittel (63), die dazu ausgelegt sind, mit der wenigstens einen zweiten Einspritzvorrichtung (61) zu kommunizieren,
- erste Kraftstoffzufuhrsperrmittel (57), mittels derer die Zufuhr von Kraftstoff von den ersten Kraftstoffspeichermitteln (53) zu der wenigstens einen ersten Einspritzvorrichtung (51) wahlweise gesperrt werden kann, wobei die zweiten Kraftstoffspeichermittel (63) dazu ausgelegt sind, stromabseitig der ersten Kraftstoffzufuhrsperrmittel (57) mit der wenigstens einen ersten Einspritzvorrichtung (51) zu kommunizieren,
- Kraftstoffsystem-Zwischenkommunikationssteuermittel (9), mittels derer die Kommunikation zwischen den zweiten Kraftstoffspeichermitteln (63) und der wenigstens einen ersten Einspritzvorrichtung (51) gesteuert werden kann, und
- eine elektronische Steuereinheit (7), die dazu ausgelegt ist, für die Ausführung eines Umschaltens von einer ersten Kraftstoffbetriebsart mit Kraftstoff von den ersten Kraftstoffspeichermitteln (53) in eine zweite Kraftstoffbetriebsart mit Kraftstoff von den zweiten Kraftstoffspeichermitteln (63) die ersten Kraftstoffzufuhrsperrmittel (57) so zu steuern, dass die Zufuhr von Kraftstoff von den ersten Kraftstoffspeichermitteln (53) zu der ersten Einspritzvorrichtung (51) gesperrt wird, und die Kraftstoffsystem-Zwischenkommunikationssteuermittel (9) so zu steuern (206), dass die Kommunikation zwischen den zweiten Kraftstoffspeichermitteln (63) und der wenigstens einen ersten Einspritzvorrichtung (51) zugelassen wird, **dadurch gekennzeichnet, dass** die elektronische Steuereinheit (7) dazu ausgelegt ist, die Kraftstoffsystem-Zwischenkommunikationssteuermittel (9) nach der Steuerung (202) der ersten Kraftstoffzufuhrsperrmittel (57) zu steuern.

2. System nach Anspruch 1, wobei die ersten Kraftstoffspeichermittel (53) dazu ausgelegt sind, mit der wenigstens einen ersten Einspritzvorrichtung (51) über erste Kraftstofftransportmittel (52, 54) zu kommunizieren, die zweiten Kraftstoffspeichermittel (63) dazu ausgelegt sind, mit der wenigstens einen zweiten Einspritzvorrichtung (61) über zweite Kraftstofftransportmittel (62, 64) zu kommunizieren, eine Kraftstoffsystem-Zwischenleitung (8, 8') dazu ausgelegt ist, eine Kommunikation zwischen den zweiten Kraftstofftransportmitteln (62, 64) und den ersten Kraftstofftransportmitteln (52, 54) stromabseitig der ersten Kraftstoffzufuhrsperrmittel (57) zu schaffen, und die Kraftstoffsystem-Zwischenkommunikationssteuermittel (9) dazu ausgelegt sind, die Strömung von Kraftstoff in die Kraftstoffsystem-Zwischenleitung (8, 8') zu steuern.

3. System nach Anspruch 2, das zweite Kraftstoffzufuhrsteuermittel (66) umfasst, mittels derer die Zufuhr von Kraftstoff von den zweiten Kraftstoffspeichermitteln (63) zu der wenigstens einen zweiten Einspritzvorrichtung (61) gesteuert werden kann, wobei die Kraftstoffsystem-Zwischenleitung (8) dazu ausgelegt ist, eine Kommunikation zwischen den ersten Kraftstofftransportmitteln (52, 54) und den zweiten Kraftstofftransportmitteln (62, 64) stromaufseitig der zweiten Kraftstoffzufuhr-Steuermittel (66) zu schaffen.

4. System nach einem der vorhergehenden Ansprüche, das erste Kraftstoffzufuhr-Ansteuerungsmittel (56) umfasst, die dazu ausgelegt sind, Kraftstoff von den ersten Kraftstoffspeichermitteln (53) zu der wenigstens einen ersten Einspritzvorrichtung (51) zu pumpen, wobei die ersten Kraftstoffzufuhrsperrmittel (57) ein erstes Kraftstoffunterbrechungsventil (57) sind, das stromabseitig der ersten Kraftstoffzufuhr-Ansteuerungsmittel (56) vorgesehen ist.

5. System nach Anspruch 1, wobei die elektronische Steuereinheit (7) dazu ausgelegt ist, nach der Steuerung (202) der ersten Kraftstoffzufuhrsperrmittel (57) die erste und die zweite Einspritzvorrichtung (51, 61) für die gleichzeitige Einspritzung von Kraftstoff von den ersten und zweiten Kraftstoffspeichermitteln (53, 63) zu steuern.

6. System nach Anspruch 1 oder 5, wobei die elektronische Steuereinheit (7) dazu ausgelegt ist, nach der Steuerung (206) der Kraftstoffsystem-Zwischenkommunikationssteuermittel (9) zu bestimmen, ob Kraftstoff von den ersten Kraftstoffspeichermitteln (53) in der wenigstens einen ersten Einspritzvorrichtung (51) zurückgeblieben ist.

7. System nach Anspruch 6, wobei die elektronische Steuereinheit (7) dazu ausgelegt ist, dann, wenn bestimmt wird, dass kein Kraftstoff von den ersten Kraftstoffspeichermitteln (53) in der wenigstens einen ersten Einspritzvorrichtung (51) zurückgeblieben ist, die erste Einspritzvorrichtung (51) zu steuern, um Kraftstoff von den zweiten Kraftstoffspeichermitteln (63) einzuspritzen.

8. Verfahren in einem Maschinensystem nach einem der Ansprüche 1-7, um von einer ersten Kraftstoffbetriebsart mit Kraftstoff von den ersten Kraftstoffspeichermitteln (53) zu einer zweiten Kraftstoffbetriebsart mit Kraftstoff von den zweiten Kraftstoffspeichermitteln (63) umzuschalten, das die folgenden Schritte umfasst:
- Steuern (202) der ersten Kraftstoffzufuhrsperrmittel (57), damit sie die Zufuhr von Kraftstoff von den ersten Kraftstoffspeichermitteln (53) zu der ersten Einspritzvorrichtung (51) sperren, und
- Steuern (206) der Kraftstoffsystem-Zwischenkommunikationssteuermittel (9), damit sie eine Kommunikation zwischen den zweiten Kraftstoffspeichermitteln (63) und der wenigstens einen ersten Einspritzvorrichtung (51) zulassen,
**dadurch gekennzeichnet, dass** der Schritt des Steuerns (206) der Kraftstoffsystem-Zwischenkommunikationssteuermittel (9) nach dem Schritt des Steuerns (202) der ersten Kraftstoffzufuhrsperrmittel (57) ausgeführt wird.

9. Verfahren nach Anspruch 8, das nach dem Schritt des Steuerns (202) der ersten Kraftstoffzufuhrsperrmittel (57) das Steuern (204) der ersten und der zweiten Einspritzvorrichtung (51, 61) zum gleichzeitigen Einspritzen von Kraftstoff von den ersten und den zweiten Kraftstoffspeichermitteln (53, 63) umfasst.

10. Verfahren nach einem der Ansprüche 8-9, das nach dem Schritt des Steuerns (206) der Kraftstoffsystem-Zwischenkommunikationssteuermittel (9) das Bestimmen (209) anhand von Signalen von einem Abgassensor, ob Kraftstoff von den ersten Kraftstoffspeichermitteln (53) in der wenigstens einen ersten Einspritzvorrichtung (51) zurückgeblieben ist, umfasst.

11. Verfahren nach Anspruch 10, das dann, wenn bestimmt wird, dass kein Kraftstoff von den ersten Kraftstoffspeichermitteln (53) in der wenigstens einen ersten Einspritzvorrichtung (51) zurückgeblieben ist, das Steuern (204) der ersten Einspritzvorrichtung (51), um Kraftstoff von den zweiten Kraftstoffspeichermitteln (63) einzuspritzen, umfasst.

## Revendications

1. Système de moteur comprenant:
- un moteur à combustion interne (2) avec au moins un cylindre,
- au moins un premier dispositif d'injection (51), chacun agencé pour injecter du carburant directement dans un cylindre respectif,
- des premiers moyens de stockage de carburant (53), agencés pour communiquer avec le au moins un premier dispositif d'injection (51),
- au moins un deuxième dispositif d'injection (61), agencé pour injecter du carburant dans le moteur à à combustion interne (2),
- des deuxièmes moyens de stockage de carburant (63), agencés pour communiquer avec le au moins un deuxième dispositif d'injection (61),
- des premiers moyens d'empêchement d'alimentation en carburant (57), au moyen desquels la fourniture de carburant, depuis les premiers moyens de stockage de carburant (53) à au moins un premier dispositif d'injection (51), peut être sélectivement empêchée, les deuxièmes moyens de stockage de carburant (63) étant agencés pour communiquer, en aval des premiers moyens d'empêchement d'alimentation en carburant (57), avec le au moins un premier dispositif d'injection (51),
- des moyens de commande de communication entre systèmes de carburant (9), au moyen desquels la communication entre les deuxièmes moyens de stockage de carburant (63) et le au moins un premier dispositif d'injection (51) peut être commandée, et
- une unité de commande électronique (7) adaptée pour, de manière à effectuer une commutation d'un premier mode de carburant, avec un carburant venant des premiers moyens de stockage de carburant (53), à un deuxième mode de carburant, avec un carburant venant des deuxièmes moyens de stockage de carburant (63), commander (202) les premiers moyens d'empêchement d'alimentation en carburant (57), de manière à empêcher la fourniture de carburant des premiers moyens de stockage de carburant (53) au premier dispositif d'injection (51), et commander (206) les moyens de commande de communication entre systèmes de carburant (9), de manière à permettre une communication entre les deuxièmes moyens de stockage de carburant (63) et le au moins un premier dispositif d'injection (51), **caractérisé en ce que** l'unité de commande électronique (7) est adaptée pour commander (206) les moyens de commande de communication entre systèmes de carburant (9) après la commande (202) des premiers moyens d'empêchement d'alimentation en carburant (57).

2. Système selon la revendication 1, dans lequel les premiers moyens de stockage de carburant (53) sont agencés pour communiquer avec le au moins un premier dispositif d'injection (51), via des premiers moyens de transport de carburant (52, 54), les deuxièmes moyens de stockage de carburant (63) sont agencés pour communiquer avec le au moins un deuxième dispositif d'injection (61), via des deuxièmes moyens de transport de carburant (62, 64), un conduit entre systèmes de carburant (8, 8') est adapté pour fournir une communication entre les deuxièmes moyens de transport de carburant (62, 64) et les premiers moyens de transport de carburant (52, 54), en aval des premiers moyens d'empêchement d'alimentation en carburant (57), et les moyens de commande de communication entre systèmes de carburant (9) sont adaptés pour commander le flux de carburant dans le conduit entre systèmes de carburant (8, 8').

3. Système selon la revendication 2, comprenant des deuxièmes moyens de commande d'alimentation en carburant (66), au moyen desquels la fourniture de carburant, à partir des deuxièmes moyens de stockage de carburant (63) vers au moins un deuxième dispositif d'injection (61), peut être commandée, le conduit entre systèmes de carburant (8) étant adapté pour fournir une communication entre les premiers moyens de transport de carburant (52, 54) et les deuxièmes moyens de transport de carburant (62, 64), en amont des deuxièmes moyens de commande d'alimentation en carburant (66).

4. Système selon l'une quelconque des revendications précédentes, comprenant des premiers moyens d'entraînement d'alimentation en carburant (56), adaptés pour pomper du carburant, à partir des premiers moyens de stockage de carburant (53) vers au moins un premier dispositif d'injection (51), les premiers moyens d'empêchement d'alimentation en carburant (57) étant une première soupape d'arrêt de carburant (57), prévue en aval des premiers moyens d'entraînement d'alimentation en carburant (56).

5. Système selon la revendication 1, dans lequel l'unité de commande électronique (7) est adaptée pour commander (204), après la commande (202) des premiers moyens d'empêchement d'alimentation en carburant (57), les premier et deuxième dispositifs d'injection (51, 61) pour une injection simultanée de carburant à partir des premiers et deuxième moyens de stockage de carburant (53, 63).

6. Système selon la revendication 1 ou 5, dans lequel l'unité de commande électronique (7) est adaptée pour déterminer (209), après la commande (206) des moyens de commande de communication entre systèmes de carburant (9), si le carburant provenant des premiers moyens de stockage de carburant (53) subsiste dans le au moins un premier dispositif d'injection (51).

7. Système selon la revendication 6, dans lequel l'unité de commande électronique (7) est adaptée pour commander (204), s'il est déterminé qu'aucun carburant provenant des premiers moyens de stockage de carburant (53) ne subsiste dans le au moins un premier dispositif d'injection (51), le premier dispositif d'injection (51) pour injection de carburant à partir des deuxièmes moyens de stockage de carburant (63).

8. Procédé, dans un système de moteur selon l'une quelconque des revendications 1 à 7, pour une commutation, d'un premier mode de carburant, avec un carburant venant des premiers moyens de stockage de carburant (53), à un deuxième mode de carburant, avec un carburant venant des deuxièmes moyens de stockage de carburant (63), comprenant les étapes consistant à :
- commander (202) les premiers moyens d'empêchement d'alimentation en carburant (57), de manière à empêcher la fourniture de carburant, des premiers moyens de stockage de carburant (53) au premier dispositif d'injection (51), et
- commander (206) les moyens de commande de communication entre systèmes de carburant (9), de manière à permettre une communication entre les deuxièmes moyens de stockage de carburant (63) et le au moins un premier dispositif d'injection (51),
**caractérisé en ce que** l'étape de commande (206) des moyens de commande de communication entre systèmes de carburant (9) est accomplie après l'étape de commande (202) des premiers moyens d'empêchement d'alimentation en carburant (57).

9. Procédé selon la revendication 8, comprenant, après l'étape de commande (202) des premiers moyens d'empêchement d'alimentation en carburant (57), la commande (204) des premier et deuxième dispositifs d'injection (51, 61), pour injection simultanée de carburant à partir des premier et deuxième moyens de stockage de carburant (53, 63).

10. Procédé selon l'une quelconque des revendications 8 à 9, comprenant la détermination (209), après l'étape de commande (206) des moyens de commande de communication entre systèmes de carburant (9), d'après des signaux provenant d'un capteur de gaz d'échappement, si du carburant provenant des premiers moyens de stockage de carburant (53) subsiste dans le au moins un premier dispositif d'injection (51).

11. Procédé selon la revendication 10, comprenant, s'il est déterminé qu'aucun carburant provenant des premiers moyens de stockage de carburant (53) ne subsiste dans le au moins un premier dispositif d'injection (51), la commande (204) du premier dispositif d'injection (51), pour injection de carburant provenant des deuxièmes moyens de stockage de carburant (63).
